# EUROPEAN PATENT SPECIFICATION

(11) **EP 2 175 579 B1**
(45) Date of publication and mention of the grant of the patent: **25.07.2012**
(21) Application number: 08166509.3
(22) Date of filing: 13.10.2008
(51) Int. Cl.: H04L 9/18, H04K 1/00

(54) **Encryption and decryption device and method for voice communications**
Verschlüsselungs- und Entschlüsselungsvorrichtung und Verfahren für Sprachkommunikationen
Dispositif de cryptage et décryptage et procédé pour communications vocales

(43) Date of publication of application: 14.04.2010
(73) Proprietor: Adeya SA, 1227 Carouge (CH)
(72) Inventor: Renouard, Cédric, 1292, Genève (CH)
(74) Representative: P&TS SA (AG, Ltd.)

(56) References cited:
- WO-A-00/25476
- WO-A-01/74005
- US-A1- 2005 111 660
- US-B1- 7 133 525
- "Exercise 3" INTERNET CITATION, [Online] 10 December 2004 (2004-12-10), XP007907744 Retrieved from the Internet: URL:http://www.nets.rwth-aachen.de/content /teaching/lectures/sub/PET/WS04 05/Exercise%203.pdf> [retrieved on 2009-03-17]
- MENEZES ET AL: "Handbook of Applied Cryptography, PASSAGE" HANDBOOK OF APPLIED CRYPTOGRAPHY; [CRC PRESS SERIES ON DISCRETE MATHEMATICES AND ITS APPLICATIONS], BOCA RATON, FL, CRC PRESS.; US, 1 January 1997 (1997-01-01), page 21,192,223, XP002383085 ISBN: 978-0-8493-8523-0

## Description

### Field of the invention

The present invention concerns an encryption method, a decryption method, an encryption device and a decryption device. The present invention relates notably, but not exclusively, to encryption or decryption methods, devices and systems for voice communication.

### Description of related art

Several methods and devices are known in the prior art for encrypting data and/or voice signals. Common methods are based for example on a symmetric key, i.e. a key shorter than the signal to encrypt and shared by the sending and receiving parties. An eavesdropper who does not know this key can only decrypt the message by trying all possible keys; the key is chosen of sufficient length to make this kind of brute force attack too long or too expensive.

Other known encryption algorithms are based on asymmetric key pairs; in this case, the sender encrypts his message with a public key of the recipient. The encrypted message can only be decrypted with the confidential private key corresponding to the public key and owned by the recipient. Common asymmetric encryption algorithms are also vulnerable against brute force attacks.

Many common encryption methods perform computation on long blocks of data. If the digital signal to encrypt is produced in real time and then streamed, it is thus necessary to store large portions of the signal in a buffer before any encryption. In the case of a digital voice signal, this buffering generates a transmission delay which may be unacceptable for example in phone communications. In addition, encrypting with common symmetric or asymmetric methods requires a processing power which may not be available in smaller user devices, for example in simple handsets or wireless headsets.

WO 00/25476 A shows a method of protecting voice communication by a stream cipher using a state variable. The state variable is updated when it has been used entirely.

It is therefore an aim of the invention to provide a new encryption or decryption method and device which is absolutely resistant against brute force attacks and other kinds of attacks.

It is another aim of the invention to provide a new encryption or decryption method and device which do not introduce any delay in the signal, or at least any noticeable delay, and which do not require an important processing power.

### Brief summary of the invention

According to the invention, these aims are achieved by means of the methods and devices defined in the independent claims 1, 12, 15, and 18. Encryption is carried out with a method for encrypting voice communication, comprising:
providing a digital voice signal,
providing a one-time key with a length greater than or equal to the length of said digital voice signal,
retrieving an encrypted signal by computing a Boolean operation between each bit of the digital voice signal and the corresponding bit of said encryption key.

In one aspect, each bit of the encrypted signal is computed by performing an exclusive-or of the initial unencrypted bit with the corresponding bit of the encryption key. Table 1 illustrates the value of an encoded bit for each possible combination of the initial bit and of the corresponding bit of the encryption key:

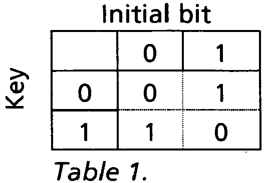

Decryption is carried out with a method comprising:
providing an encrypted voice signal,
providing a one-time key with a length greater than or equal to the length of said signal,
retrieving a decrypted digital voice signal by computing a Boolean operation between each bit of the encrypted signal and the corresponding bit of said encryption key.

In an example, the bits of the digital signal are retrieved in the receiver by performing an exclusive-OR between each encoded bit and the corresponding bit of the same key, as shown by Table 2:

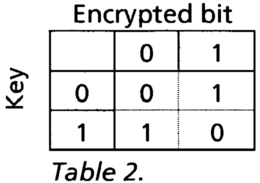

The same key is thus used for encryption and decryption. Other Boolean functions using the same or different keys can be used for encryption or decryption.

This method has the advantage of encrypting the successive bits of the digital voice signal one after another, as a function of the corresponding bit of the encryption and decryption key. The encryption is independent of the value of other bits of the signal or of other positions of the key. The encryption can thus be performed in real time, immediately after obtaining each bit, without any need for buffering or delaying the signal.

This method has the advantage of being demonstrably tamper-proof. The value of each encrypted bit depends only on the corresponding unencrypted bit and on the corresponding bit of the encryption key. The knowledge of other encrypted bits or of other bits of the encryption keys is of no use for decrypting a particular bit. It is possible to show mathematically that this encryption scheme is absolutely impossible to break with brute force attacks.

### Brief Description of the Drawings

The invention will be better understood with the aid of the description of an embodiment given by way of example and illustrated by the figures, in which:
Fig. 1 shows a view of a coding device according to an aspect of the invention.
Fig. 2A-2C show schematic bloc-diagram of various encryption and decryption systems.
Fig. 3 shows a view of a coding device as part of a handset.
Fig. 4 shows a view of a coding device as part of a wireless headset.
Fig. 5 shows a view of a transmission system with one coding and one decoding device.

### Detailed description of possible embodiments of the Invention

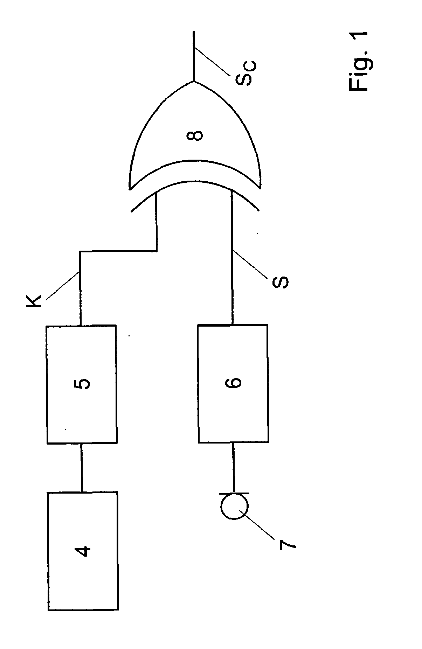

Figure 1 shows a view of a coding device according to an aspect of the invention. The device comprises a memory 4 for storing a one-time encryption key. The memory is preferably a removable memory, such as a Flash-memory, for example in a CompactFlash, MemoryStick, USB key, etc., or preferably SD format. Other kind of removable memories, including optical or magnetic disks, read-only memories, EPROM, EEPROM, RFID tags, barcodes, or non removable memories, may also be used as long as they have a sufficient capacity for storing one encryption/decryption bit for each bit transmitted/received. The device preferably further comprises a reader or interface 5 for the memory 4, for example a suitable Flash memory reader or interface for mechanically and electrically connecting the removable memory 4. The reader or interface 5 serially delivers the bits of a key K read from a desired portion of memory 4.

The device also comprises means for obtaining a voice signal, for example a microphone 7 or an interface for receiving a voice signal recorded with another apparatus and transmitted to the device over a suitable communication link. The voice signal thus obtained is digital converted and/or otherwise coded by a coding unit 6, for example an analog-to-digital converter associated with a suitable codec. The coding unit 6 delivers a digital, still unencrypted voice signal S at its output.

The encryption of the digital voice signal S output by the coding unit 6 is performed by a Boolean circuit 8, in this example a Boolean gate, for example a XOR gate. The Boolean circuit 8 performs a Boolean operation between each successive bit of the voice digital signal and the corresponding bit of the key retrieved from memory 4. For example, the first bit of the digital voice signal s is combined by the gate 8 with the first bit of the encryption key, the second bit of the signal with the second bit of the key, etc., up to the n^{th} bit of the signal s combined with the n^{th} bit of the key.

The circuit may comprise synchronization elements, not shown, including for example flip-flops, for synchronizing the reading of the successive bits from the memory 4 with the stream of bits output by the coding circuit 6. Other possible implementations may include for example software based combinations of bits from the digital voice signal with corresponding bits of the key, or Asics, microprocessor, digital signal processors (DSP) and/or FPGA-based Boolean modules. It is also possible to combine several bits, for example a byte, simultaneously in a single operation.

The Boolean circuit 8 outputs a coded signal Sc in which each bit depends on one bit of the unencrypted signal S and on the corresponding bit of the key. It is impossible to retrieve the value of a bit of S without knowing the corresponding bit of the key.

The successive bits K₁, K₂, .., Kᵢ, ..., Kₙ read from the key K in memory 4 are marked as used after encryption, and not used for coding subsequent bits of the voice signal. Each bit Kᵢ of the key is thus used only once. The length n of the key 4 must thus be equal or longer than the signal s to encrypt. In an embodiment, the bits of the key K are organized in groups with more than one bit in each group, for example in bytes. Each group is marked as used once at least one bit of the group has been used in a communication. If the bits of the key are used in a sequence, marking may be done by updating a pointer to the next available bit or group of bits; the pointer may be stored in each device, or in the memory 4. In another embodiment, the key K is stored as a data in a file or as one or several records in a database, and the bits Kᵢ of the key that have been used are deleted from the file or database after use.

The circuit of figure 1 may be part of a handset, of a wireless headset, of a central server or of other kind of portable user device. A similar circuit can be used for decrypting signals encrypted with this method by another device; in this case, it is sufficient to input the encrypted signal Sc to the Boolean gate 8, in replacement of the digital voice signal S. A bidirectional voice communication device, such as a phone terminal, preferably comprises two Boolean circuits 8, one for encrypting outgoing voice signals S, and the other one for decrypting incoming encrypted Sc. The two gates used for encryption and decryption may use the same memory 4 for retrieving the key K, or different memories. It is also possible to use different positions of the same key for encryption and decryption, or different keys.

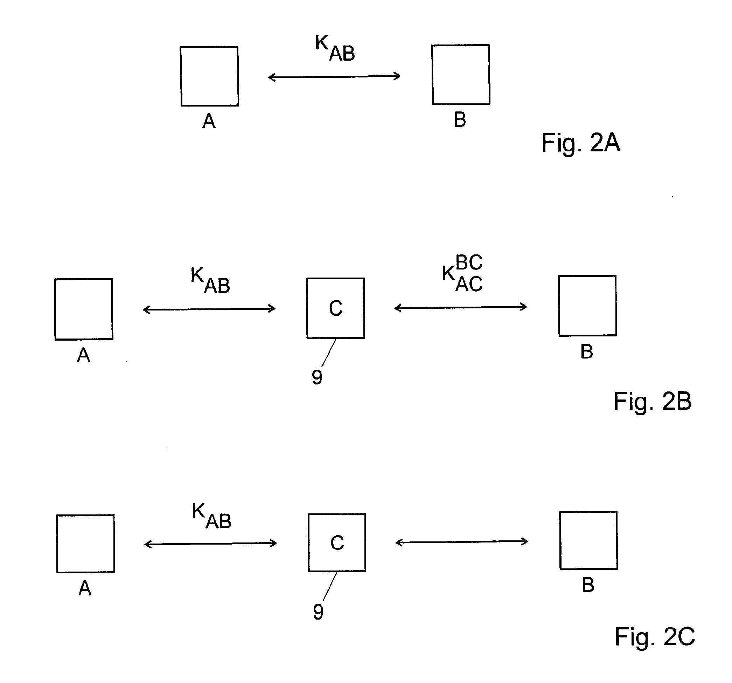

Figure 2A schematically illustrates a system comprising two parties A, B between which a voice communication has been established. The parties could use for example phone or computer equipments and the communication may be established for example over a phone or over a voice over IP network. Confidentiality of the phone communication is ensured by encrypting at the sending side each bit Sᵢ of the digital voice signal with a corresponding bit K_{AB,i} of a key K_{AB} . The key K_{AB} is shared by both parties A, B, so that decryption of the received signal at the recipient side is performed using the same key. In this setting, each party i must share at least one key K_{i,j} for each party j with which he wants to encrypt voice communications. As the keys may be very long - at least as long as the signals - and as they are used only once, the number of keys that are required, and the size of the memory 4 for storing those keys, are very large. Furthermore, each party can only encrypt and decrypt voice communications with other parties sharing a common, still unused key.

Figure 2B illustrates another possible system in which a central server C (9) is used for encrypting voice communications between several parties, A and B in this example. Voice communications between A and the central C are secured by encrypting and decrypting them using a first key K_{AC}. A different key K_{BC} is used for the path between the central server C and the other party B. Each party A, B thus only needs to share one key or set of keys with the central server C, instead of sharing keys with each possible partner. However, the voice signals must be decrypted and re-encrypted in the central server C; this may be a concern if one party doesn't trust this server. A double encryption using another encryption method, for example a symmetric or asymmetric encryption scheme, for example based on DES or AES, may be used for end-to-end encryption between the parties A and B, and for ensuring that the signal decrypted in the server C is still scrambled.

The central server C may be operated by one of the parties A or B, for example as part of their telephone infrastructure, or by any third party, including a phone network operator. A system comprising more than one central server, operated by one or more parties, may also be used. The entity that operates one central server C may also generate the encryption/decryption keys and distribute them to the parties, for example by mailing Flash memories with keys K_{iC} to registered parties. In addition, the operator of the central server C may also bill the encrypted voice communications, and/or the keys, to the calling party, or to both parties.

Figure 2C illustrates a system similar to the one of Figure 2B, but where the communication between the central server C and one party B is not encrypted, or not encrypted with a one-time key. This setting may be used for example when the path between the central server C and the party B is considered as safe - for example within a company or within a country - or if other encryption methods are used between the party B and the central server C, or between B and A.

As already explained, different keys may also be used in each encryption and decryption device of the figures for incoming and for outgoing voice communications.

If at least one party has several keys - for example keys corresponding to different other parties - it may be necessary to define between the parties which of the keys, or which position of a single key, will be used for encrypting and decrypting the subsequent voice communication. Agreement on the key to use for encryption and decryption at each side may be found during establishment or initial phase of the voice communication. In one embodiment, this information is exchanged vocally by the users who select one key, or pair of keys, among several available keys; the identification of the selected key or pair of keys can then be entered by the users on a keypad or keyboard of their device, and used for encrypting the rest of the communication, or parts of the communication. In another preferred embodiment, the identification of the key or keys is automatically transmitted over a signalization channel, or as DTMF commands, between the parties A, B and/or C.

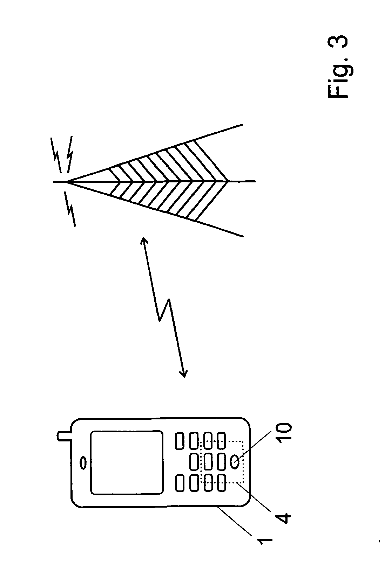

Figure 3 illustrates an aspect of the invention where one party uses a handset 1, such as a fixed or mobile phone, a PDA, or a terminal of a PC for encrypting and decrypting digital voice signals. The handset comprises a microphone 10 for capturing the voice of the user, and a memory 4, for example a removable memory such as a SD, Memory Stick, CompactFlash or USB memory, for storing the one-time keys used for encrypting and decrypting voice communications with other parties. Encryption and decryption are performed with a suitable software and/or hardware module in the handset 1, so that already the air interface to the basis station 2, respectively the connection between the handset and the first switch, are protected. The basis station may be for example a cellular mobile station, or a fixed type station such as a DECT station of Wifi hotspot.

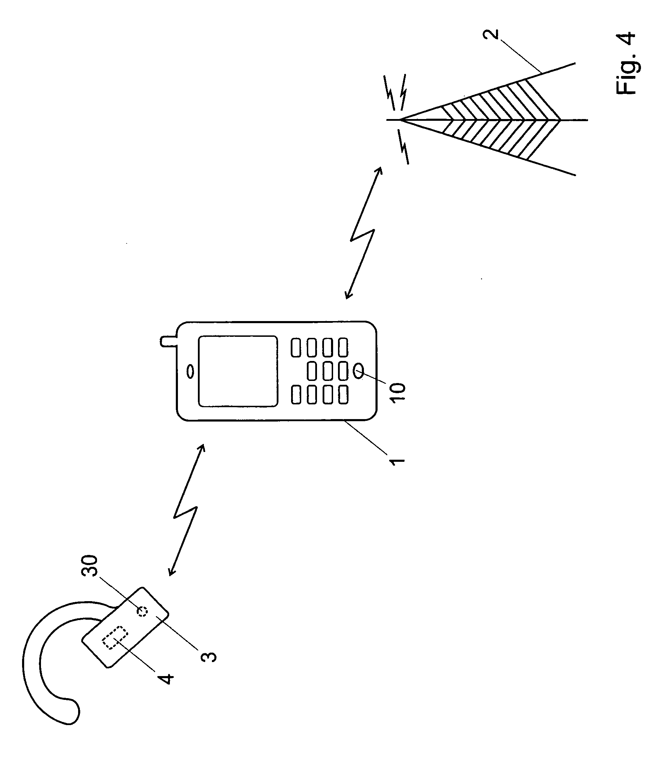

Figure 4 illustrates an aspect of the invention where one party uses a wireless headset 3 for encrypting and decrypting digital voice signals. The wireless headset preferably comprises a microphone 30 and a memory 4, such as a removable memory, for storing the key. As for the above described embodiment with a handset, the memory 4 may be for example a SD, Memory Stick, CompactFlash or USB memory removably connected to the wireless headset.

The wireless headset 3 is connected, preferably over a wireless link, such as Bluetooth or nfc, to a terminal or handset 1 in the vicinity. Encryption of voice signals recorded with the microphone 30, and decryption of voice signals received by the wireless headset, are preferably performed by a device including hardware and/or software module, such as a microprocessor, in the wireless headset. In another embodiment, the encryption and decryption are performed in the handset 1 connected to the wireless headset. In both embodiments, encrypting/decrypting is performed as already described by a Boolean combination of each bit of the voice signal with corresponding bit of the key in the memory 4 of the wireless headset.

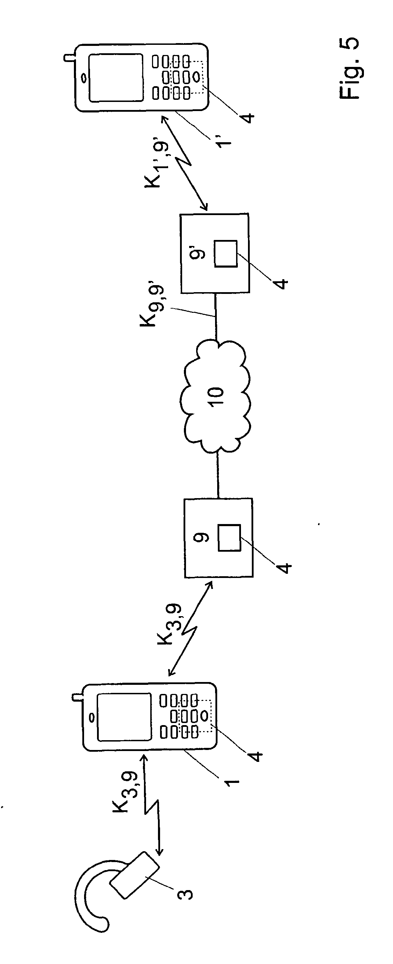

Figure 5 illustrates a system including a first party using a handset 1 with a wireless headset 3, and another party using a handset 1'. The first party establishes an encrypted voice communication with a first central server 9; confidentiality is based on a one-time key K_{3,9} shared between the wireless headset 3 and the first central server 9. The second party establishes an encrypted voice communication with a second central server 9'; confidentiality is based on a key K_{1',9'} shared between the handset 1' of the second user and the second central server 9'. Confidentiality in the network 10 between both centrals 9, 9' is based on a third key K_{9,9'} shared by the two central servers. As the voice signal is decrypted and then re-encrypted with a different key in both central servers, an additional encryption algorithm may be used between both parties for scrambling the voice data before encryption with the above described algorithm.

In all embodiments of the invention described so far, confidentiality is based on keys shared by both communicating parties for encrypting voice signals. The keys are preferably distributed on a data medium, for example a Flash memory. Access to the key stored in the data medium may require authentication of the user, for example using a password or biometric authentication means. In addition, the key stored on the medium may be encrypted with another algorithm, such as DES or AES, to prevent unwanted copying or reading during transmission to the parties. DRM (digital right mechanism) may also be used to prevent reading of the keys in unauthorized devices, to prevent copying of the key, or multiple use of the key. It is also possible within the frame of the invention to distribute keys over a telecommunication network 10, for example over the air.

Encryption devices in the handsets, in the wireless headsets and/or in the central server can preferably be managed from a remote device, for example from a remote computer or phone, using commands sent over a telecommunication network using any kind of suitable bearer, including but not limited to SMS, MMS, USSDs, e-mails etc. Commands may be used for example for defining the type of encryption to use between two parties, the identification of the key to use, other encryption or decryption parameters, etc. It may also be possible to send commands for erasing data in the remote device, for example data in a central server 9 or 9, in a handset 1, 1', in a wireless headset 3 and/or in a memory 4, 40, for example in order to remove any trace. Erasing commands preferably have a "wipe" effect, so that the relevant memory locations are not only erased, but also overwritten, preferably a number of times, to prevent recovery. Erasing may concern any data in a handset or wireless headset, including received messages, directory, history of phone calls or communications etc.

As already mentioned, the encryption decryption method requires long keys that are used only once. When a key in the memory has been entirely used, the phone conversation is preferably interrupted to avoid any confidentiality breach. In another embodiment, the conversation may continue but is protected with another algorithm based on a shorter symmetric or asymmetric key; both parties are preferably informed, possibly with an audio or display message, that the key has been entirely used and that the communication is only protected with a weaker protection algorithm. In an embodiment, a message that the key has been used is automatically sent for example to the central server, and a new key is automatically generated and sent per mail to both parties.

The method of the invention can also be used for encrypting data, including SMS, emails etc., sent or received by one device.

Those of skill would further appreciate that any of the various illustrative logical blocks, modules, processors, means, circuits, and algorithm steps described in connection with the aspects disclosed herein may be implemented as electronic hardware (e.g., a digital implementation, an analog implementation, or a combination of the two, which may be designed using source coding or some other technique), various forms of program or design code incorporating instructions (which may be referred to herein, for convenience, as "software" or a "software module"), or combinations of both. To clearly illustrate this interchangeability of hardware and software, various illustrative components, blocks, modules, circuits, and steps have been described above generally in terms of their functionality. Whether such functionality is implemented as hardware or software depends upon the particular application and design constraints imposed on the overall system. Skilled artisans may implement the described functionality in varying ways for each particular application, but such implementation decisions should not be interpreted as causing a departure from the scope of the present disclosure.

The various illustrative logical blocks, modules, and circuits described in connection with the aspects disclosed herein may be implemented within or performed by an integrated circuit ("IC"), an access terminal, or an access point. The IC may comprise a general purpose processor, a digital signal processor (DSP), an application specific integrated circuit (ASIC), a field programmable gate array (FPGA) or other programmable logic device, discrete gate or transistor logic, discrete hardware components, electrical components, optical components, mechanical components, or any combination thereof designed to perform the functions described herein, and may execute codes or instructions that reside within the IC, outside of the IC, or both. A general purpose processor may be a microprocessor, but in the alternative, the processor may be any conventional processor, controller, microcontroller, or state machine. A processor may also be implemented as a combination of computing devices, e.g., a combination of a DSP and a microprocessor, a plurality of microprocessors, one or more microprocessors in conjunction with a DSP core, or any other such configuration.

### Elements of the Figures

- 1: Handset
- 1': Handset of second user
- 10: Microphone of the handset
- 2: Basis station
- 3: Wireless headset
- 30: Microphone of the wireless headset
- 4: Memory for one-time key
- 5: Reader or interface
- 6: Coding unit
- 7: Microphone
- 8: Boolean circuit
- 9: Central server
- 9': Second central server
- 10: Network

## Claims

1. A method for encrypting voice communication, comprising:
providing a digital voice signal (S),
providing a one-time key (K) with a length (n) greater or equal than the length of said digital voice signal,
retrieving an encrypted signal (Sc) by performing a Boolean operation between each bit (Sᵢ) of the digital voice signal and the corresponding bit (Kᵢ) of the key (K), **characterized by**
protecting the voice communication with a weaker protection algorithm when the key (K) has been entirely used,
informing parties when the key (K) has been entirely used and that the voice communication is only protected with a weaker protection algorithm,
sending a message that the key (K) has been used, to a central server, and
generating a new key and sending the new key per mail to the parties.

2. The method of claim 1, further reading said key (K) from a removable digital data support (4).

3. The method of claim 2, said key being read from a handset (1, 1'), from a wireless headset (3) or from a central server (S) storing keys for a plurality of users.

4. The method of one of the claims 1 to 3, further comprising:
additionally encrypting said digital voice signal with a symmetric or asymmetric encryption key.

5. The method of one of the claims 1 to 4, further comprising:
sending a message to the receiving party indicating the key (K) used for further encryption.

6. The method of one of the claims 1 to 5, further comprising:
marking each bit (Kᵢ) of the key (K) as used once it has been used for encryption.

7. The method of one of the claims 1 to 5, further comprising:
defining groups of bits of the key (K), each group comprising more than one bit,
marking a group of bits of the key as used if at least one bit (Kᵢ) in the group has been used for encryption.

8. The method of one of the claims 1 to 7, further interrupting a voice communication when all bits of the key (K) have been used.

9. The method of one of the claims 1 to 8, further using another encryption technology when all bits of the key (K) have been used.

10. The method of one of the claims 1 to 9, further storing a plurality of one-time keys (K) for communication with a corresponding plurality of recipients.

11. The method of one of the claims 1 to 10, further comprising receiving an erasing command and erasing memory portions storing confidential data when the erasing command has been received.

12. A method for decrypting voice communication, comprising:
providing an encrypted digital signal (Sc),
providing a one-time key (K) with a length (n) greater than or equal to the length of said digital signal,
retrieving a decrypted voice signal (S) by performing a Boolean operation between each bit (Scᵢ) of the digital signal (Sc) and, the corresponding bit (Kᵢ) of said key (K) and **characterized by** retrieving a decrypted voice signal by performing a weaker protection algorithm when the key (K) has been entirely used,
informing parties when the key (K) has been entirely used and that the voice communication is only protected with a weaker protection algorithm,
sending a message that the key (K) has been used, to a central server, and
generating a new key and sending the new key per mail to the parties.

13. The method of claim 12, further reading said key (K) from a removable digital data support (4).

14. The method of claim 13, said key being read from a handset (1, 1'), from a wireless headset (3) or from a central server (C) shared by a plurality of users.

15. An encryption device (1, 1', 3, C) for encrypting voice communication, comprising:
a digital voice signal input (10, 30, B),
a memory (4) for storing a one-time key (K) with a length (n) greater than or equal to the length of the digital voice signal (S) to encrypt,
a Boolean circuit (8) for performing a Boolean operation between each bit (Sᵢ) of the digital voice signal (S) and the corresponding bit (Kᵢ) of the key (K)
and **characterized in that** the encryption device further comprises a weaker protection algorithm for protecting the voice communication when the key (K) has been entirely used,
a means for informing parties when the key (K) has been entirely used and that the voice communication is only protected with a weaker protection algorithm,
a means for sending a message that the key (K) has been used, to a central server, which comprises
a means for generating a new key and sending the new key per mail to the parties.

16. The encryption device of claim 15, as part of a handset (1, 1') or of a wireless headset (3).

17. The encryption device of one of the claims 15 to 16, said memory (4) being removable, the device comprising a reader (5) for reading the memory.

18. A decryption device (1, 1'. 3, C) for decrypting voice communication, comprising:
an encrypted signal input,
a memory (4) for storing a one-time key (K) with a length (n) greater than or equal to the length of the encrypted signal to decrypt,
a Boolean circuit (8) for performing a Boolean operation between each bit (Scᵢ) of the encrypted voice signal (Sc) and, the corresponding bit (Kᵢ) of the key (K) and characterized is that the decryption device further comprises a weaker protection algorithm when the key (K) has been entirely used,
a means for informing parties when the key (K) has been entirely used and that the voice communication is only protected with a weaker protection algorithm,
a means for sending a message that the key (K) has been used, to a central server, which comprises
a means for generating a new key and sending the new key per mail to the parties.

## Patentansprüche

1. Ein Verfahren zum Verschlüsseln von Sprachkommunikation, aufweisend :
Bereitstellen eines digitalen Sprachsignals (S),
Bereitstellen eines ein-mal Schlüssels (K) mit einer Länge (n) grösser gleich der Länge des besagten digitalen Sprachsignals,
Bestimmen eines verschlüsselten Signals (Sc) durch Durchführung einer Boolschen Operation zwischen jedem Bit (Si) des digitalen Sprachsignals und des entsprechenden Bits (Ki) des Schlüssels (K),
**gekennzeichnet durch**
Schützen der Sprachkommunikation mit einem schwächeren Schutzalgorithmus, wenn der Schlüssel (K) vollständig benutzt wurde,
Informieren der Parteien, wenn der Schlüssel vollständig benutzt wurde und dass die Sprachkommunikation nur mit einem schwächeren Schlüssel geschützt ist,
Senden einer Nachricht an einen Server, dass der Schlüssel (K) benutzt wurde, und
Erzeugen eines neuen Schlüssels und Senden des neuen Schlüssels per Mail an die Parteien.

2. Das Verfahren nach Anspruch 1, weiterhin Lesen des besagten Schlüssels (K) von einem löschbaren digitalen Datenträger (4).

3. Das Verfahren nach Anspruch 2, wobei besagter Schlüssel (K) von einem Schlüssel für eine Mehrzahl von Benutzern speichernden Handapparat (1, 1'), kabellosen Kopfhörer (3) oder zentralen Server (S) gelesen wird.

4. Das Verfahren nach einem der Ansprüche 1 bis 3, weiterhin aufweisend:
zusätzlich Verschlüsseln des besagten digitalen Sprachsignals mit einem symmetrischen oder asymmetrischen Verschlüsselungsschlüssel.

5. Das Verfahren nach einem der Ansprüche 1 bis 4, weiterhin aufweisend:
Senden einer Nachricht an die empfangende Partei, die den für die weitere Verschlüsselung verwendeten Schlüssel (K) anzeigt.

6. Das Verfahren nach einem der Ansprüche 1 bis 5, weiterhin aufweisend:
Kennzeichnen jedes Bits (Ki) des Schlüssels (K) als benutzt sobald es für die Verschlüsselung verwendet wurde.

7. Das Verfahren nach einem der Ansprüche 1 bis 5, weiterhin aufweisend:
Definieren von Bitgruppen des Schlüssels (K), wobei jede Gruppe mehr als ein Bit aufweist,
Kennzeichnen einer Bitgruppe des Schlüssels als benutzt, wenn wenigstens ein Bit (Ki) in der Gruppe für die Verschlüsselung verwendet wurde.

8. Das Verfahren nach einem der Ansprüche 1 bis 7, weiterhin Unterbrechen einer Sprachkommunikation, wenn alle Bits eines Schlüssel benutzt wurden.

9. Das Verfahren nach einem der Ansprüche 1 bis 8, weiterhin Verwenden einer anderen Verschlüsselungstechnologie, wenn alle Bits des Schlüssels verwendet wurden.

10. Das Verfahren nach einem der Ansprüche 1 bis 9, weiterhin Speichern einer Vielzahl von ein-mal Schlüsseln (K) zur Kommunikation mit einer entsprechenden Mehrzahl von Empfängern.

11. Das Verfahren nach einem der Ansprüche 1 bis 10, weiterhin aufweisend Empfangen eines Löschbefehls und Löschen des Speicherabschnitts, der die vertraulichen Daten speichert, wenn der Löschbefehl empfangen wird.

12. Ein Verfahren zum Entschlüsseln von Sprachkommunikation, aufweisend :
Bereitstellen eines digitalen Signals (Sc),
Bereitstellen eines ein-mal Schlüssels (K) mit einer Länge (n) grösser gleich der Länge des besagten digitalen Signals,
Bestimmen eines entschlüsselten Sprachsignals (Sc) durch Durchführung einer Boolschen Operation zwischen jedem Bit (Sci) des digitalen Signals und des entsprechenden Bits (Ki) des Schlüssels (K) und
**gekennzeichnet durch**
Bestimmen eines entschlüsselten Sprachsignals **durch** Durchführung eines schwächeren Schutzalgorithmusses, wenn der Schlüssel (K) vollständig verwendet wurde,
Informieren der Parteien, wenn der Schlüssel vollständig benutzt wurde und dass die Sprachkommunikation nur mit einem schwächeren Schlüssel geschützt ist,
Senden einer Nachricht an einen Server, dass der Schlüssel (K) benutzt wurde, und
Erzeugen eines neuen Schlüssels und Senden des neuen Schlüssels per Mail an die Parteien.

13. Das Verfahren nach Anspruch 12, weiterhin Lesen des besagten Schlüssels (K) von einem löschbaren digitalen Datenträger (4).

14. Das Verfahren nach Anspruch 13, wobei besagter Schlüssel (K) von einem Handapparat (1, 1'), kabellosen Kopfhörer (3) oder zentralen Server (S) geteilt durch eine Mehrzahl von Benutzern gelesen wird.

15. Ein Verschlüsselungsgerät zum Verschlüsseln von Sprachkommunikation, aufweisend :
eine digitale Sprachsignalseingabe (10, 30, B),
einen Speicher (4) zum Speichern eines ein-mal Schlüssels (K) mit einer Länge (n) grösser gleich der Länge des besagten zu verschlüsselnden digitalen Sprachsignals,
einen Boolschen Schaltkreis (8) zum Durchführung einer Boolschen Operation zwischen jedem Bit (Si) des digitalen Sprachsignals und des entsprechenden Bits (Ki) des Schlüssels (K) und
**gekennzeichnet dadurch, dass** das Verschlüsselungsgerät weiter aufweist
einen schwächeren Schutzalgorithmus zum Schützen der Sprachkommunikation, wenn der Schlüssel (K) vollständig benutzt wurde,
Mittel zum Informieren der Parteien, wenn der Schlüssel vollständig benutzt wurde und dass die Sprachkommunikation nur mit einem schwächeren Schlüssel geschützt ist,
Mittel zum Senden einer Nachricht, dass der Schlüssel (K) benutzt wurde, an einen Server, das ein Mittel zum Erzeugen eines neuen Schlüssels und zum Senden des neuen Schlüssels per Mail an die Parteien aufweist.

16. Das Verschlüsselungsgerät nach Anspruch 15, als Teil eines Handapparats(1, 1') oder eines kabellosen Kopfhörers (3).

17. Das Verschlüsselungsgerät nach Anspruch 15 oder 16, wobei besagter Speicher (4) löschbar ist und das Gerät einen Leser (5) zum Lesen des Speichers aufweist.

18. Ein Entschlüsselungsgerät (1, 1' . 3, C) zum Entschlüsseln von Sprachkommunikation, aufweisend :
eine verschlüsselte Signaleingabe,
einen Speicher (4) zum Speichern eines ein-mal Schlüssels (K) mit einer Länge (n) grösser gleich der Länge des zu entschlüsselnden verschlüsselten Signals,
einen Boolschen Schaltkreis (8) zum Durchführung einer Boolschen Operation zwischen jedem Bit (Sci) des verschlüsselten Sprachsignals und des entsprechenden Bits (Ki) des Schlüssels (K) und
**gekennzeichnet dadurch, dass** das Verschlüsselungsgerät weiterhin aufweist
einen schwächeren Schutzalgorithmus, wenn der Schlüssel (K) vollständig benutzt wurde,
Mittel zum Informieren der Parteien, wenn der Schlüssel vollständig benutzt wurde und dass die Sprachkommunikation nur mit einem schwächeren Schlüssel geschützt ist,
Mittel zum Senden einer Nachricht, dass der Schlüssel (K) benutzt wurde, an einen Server, das ein Mittel zum Erzeugen eines neuen Schlüssels und zum Senden des neuen Schlüssels per Mail an die Parteien aufweist.

## Revendications

1. Un procédé pour crypter une communication vocale, comprenant:
fournir un signal vocal numérique (S),
fournir une clé à usage unique (K) avec une longueur (n) supérieure ou égale à la longueur dudit signal vocal numérique,
obtenir un signal crypté (Sc) en effectuant une opération booléenne entre chaque bit (Sᵢ) du signal vocal numérique et le bit correspondant (Kᵢ) de la clé (K), **caractérisé par**
protéger la communication vocale avec un algorithme de protection plus faible lorsque la clé (K) a été entièrement utilisée,
informer les participants lorsque la clé (K) a été entièrement utilisée et que la communication vocale est seulement protégée par un algorithme de protection plus faible,
envoyer un message que la clé (K) a été utilisée, à un serveur central,
générer une nouvelle clé et envoyer la nouvelle clé par courrier aux participants.

2. Le procédé selon la revendication 1, comprenant en outre une lecture de ladite clé (K) à partir d'un support amovible de données numériques (4).

3. Le procédé selon la revendication 2, ladite clé étant lue à partir d'un combiné (1, 1'), d'un écouteur sans fil (3) ou d'un serveur central (S) stockant des clés pour plusieurs utilisateurs.

4. Le procédé selon l'une des revendications 1 à 3, comprenant en outre:
cryptage additionnel dudit signal vocal numérique avec une clé de cryptage symétrique ou asymétrique.

5. Le procédé selon l'une des revendications 1 à 4, comprenant en outre:
envoyer un message à la partie réceptrice indiquant la clé (K) utilisée pour les cryptages futurs.

6. Le procédé selon l'une des revendications 1 à 5, comprenant en outre:
marquage de chaque bit (Kᵢ) de la clé (K) comme utilisé une fois qu'il a été utilisé pour le cryptage.

7. Le procédé selon l'une des revendications 1 à 5, comprenant en outre:
définition de groupes de bits de la clé (K), chaque groupe comprenant plus d'un bit,
marquage d'un groupe de bits de la clé comme utilisé si au moins un bit (Kᵢ) dans le groupe a été utilisé pour le cryptage.

8. Le procédé selon l'une des revendications 1 à 7, interrompant en outre une communication vocale lorsque tous les bits de la clé (K) ont été utilisés.

9. Le procédé selon l'une des revendications 1 à 8, utilisant en outre une autre technique de cryptage lorsque tous les bits de la clé (K) ont été utilisés.

10. Le procédé selon l'une des revendications 1 à9, stockant en outre plusieurs clés à usage unique (K) pour communiquer avec plusieurs destinataires correspondants.

11. Le procédé selon l'une des revendications 1 à 10, comprenant en outre une réception d'une commande d'effacement et un effacement de portions de mémoire stockant des données confidentielles lorsque la commande d'effacement a été reçue.

12. Un procédé pour décrypter une communication vocale, comprenant:
fournir un signal numérique crypté (Sc),
fournir une clé à usage unique (K) avec une longueur (n) supérieure ou égale à la longueur dudit signal numérique,
obtenir un signal vocal décrypté (S) en effectuant une opération booléenne entre chaque bit (Sci) du signal numérique (Sc) et le bit correspondant (Ki) de ladite clé (K),
**caractérisé par** l'obtention d'un signal vocal décrypté en appliquant un algorithme de protection plus faible lorsque la clé (K) a été entièrement utilisée,
information des participants lorsque la clé (K) a été entièrement utilisée et que la communication vocale est seulement protégée par un algorithme de protection plus faible,
envoi d'un message que la clé (K) a été utilisée, à un serveur central,
génération d'une nouvelle clé et l'envoi de la nouvelle clé par courrier aux participants.

13. Le procédé selon la revendication 12, comprenant en outre une lecture de ladite clé (K) à partir d'un support amovible de données numériques (4).

14. Le procédé selon la revendication 13, ladite clé étant lue à partir d'un combiné (1, 1'), d'un écouteur sans fil (3) ou d'un serveur central (C) partagé par plusieurs utilisateurs.

15. Un dispositif de cryptage (1, 1', 3, C) pour crypter une communication vocale, comprenant:
une entrée de signal vocal numérique (10, 30, B),
une mémoire (4) pour stocker une clé à usage unique (K) avec une longueur (n) supérieure ou égale à la longueur du signal vocal numérique (S) à encrypter,
un circuit booléen (8) pour effectuer une opération booléenne entre chaque bit (Si) du signal vocal numérique (S) et le bit correspondant (Ki) de la clé (K))
et **caractérisé en ce que** le dispositif de cryptage comprend en outre
un algorithme de protection plus faible pour protéger la communication vocale lorsque la clé (K) a été entièrement utilisée,
un moyen pour informer les participants lorsque la clé (K) a été entièrement utilisée et que la communication vocale est seulement protégée par un algorithme de protection plus faible,
un moyen pour envoyer un message que la clé (K) a été utilisée à un serveur central, qui comprend
un moyen pour générer une nouvelle clé et envoyer la nouvelle clé par courrier aux participants.

16. Le dispositif de cryptage selon la revendication 15, faisant partie d'un combiné (1, 1') ou d'un écouteur sans fil (3).

17. Le dispositif de cryptage selon l'une des revendications 15 à 16, ladite mémoire (4) étant amovible, le dispositif comprenant un lecteur (5) pour lire la mémoire.

18. Un dispositif de décryptage (1, 1'. 3, C) pour décrypter une communication vocale, comprenant:
une entrée de signal crypté,
une mémoire (4) pour stocker une clé à usage unique (K) avec une longueur (n) supérieure ou égale à la longueur du signal crypté à décrypter,
un circuit booléen (8) pour effectuer une opération booléenne entre chaque bit (Sci) du signal vocal crypté (Sc) et le bit correspondant (Ki) de la clé (K))
et **caractérisé en ce que** le dispositif de décryptage comprend en outre
un algorithme de protection plus faible lorsque la clé (K) a été entièrement utilisée,
un moyen pour informer les participants lorsque la clé (K) a été entièrement utilisée et que la communication vocale est seulement protégée par un algorithme de protection plus faible,
un moyen pour envoyer un message que la clé (K) a été utilisée, à un serveur central, qui comprend
un moyen pour générer une nouvelle clé et envoyer la nouvelle clé par courrier aux participants.
